(19) Europäisches Patentamt / European Patent Office / Office européen des brevets

(11) **EP 4 346 086 A1**

(12) **EUROPÄISCHE PATENTANMELDUNG**

(43) Veröffentlichungstag:
**03.04.2024   Patentblatt 2024/14**

(21) Anmeldenummer: **22198924.7**

(22) Anmeldetag: **30.09.2022**

(51) Internationale Patentklassifikation (IPC):
*H02P 6/34* (2016.01)        *G05B 17/02* (2006.01)
*G06N 20/00* (2019.01)        *H02P 23/00* (2016.01)

(52) Gemeinsame Patentklassifikation (CPC):
**H02P 6/34; G06N 20/00; H02P 23/0018; H02P 23/0031**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Die Erfindernennung liegt noch nicht vor**

(74) Vertreter: **Siemens Patent Attorneys**
**Postfach 22 16 34**
**80506 München (DE)**

(54)   **VERFAHREN ZUR ÜBERWACHUNG EINER ELEKTRISCHEN MASCHINE**

(57)   Die Erfindung betrifft ein Verfahren zur Überwachung einer elektrischen Maschine, wobei die Überwachung für wiederkehrende Betriebszustände der dynamoelektrischen Maschine erfolgt, wobei eine Überwachung von realen Daten einer Regelung der dynamoelektrischen Maschine mit erwarteten Daten erfolgt, wobei Abweichungen der realen Daten und der erwarteten Daten abhängig von der Zeit kumuliert werden, wobei mittels der Abweichungen eine Klassifizierung des Verhaltens der Regelung durchgeführt wird, wobei die Klassifizierung der Regelung über die Zeit überwacht wird, wobei abhängig von der Überwachung der Klassifizierung die erwarteten Daten verändert werden.

FIG 1

EP 4 346 086 A1

**Beschreibung**

Die Erfindung betrifft ein Verfahren zur Überwachung einer elektrischen Maschine. Eine elektrische Maschine ist beispielsweise eine dynamoelektrische Maschine, wie z.B. ein Motor oder ein Generator. Eine elektrische Maschine ist beispielsweise ein Antrieb, welcher einen Stromrichter und eine dynamoelektrische Maschine aufweist. Auch der Stromrichter selbst kann als elektrische Maschine bezeichnet werden. Elektrisch angetriebene Maschinen wie Pumpen, Lüfter bzw. Kompressoren können auch als elektrische Maschinen bezeichnet werden. Die Erfindung betrifft insbesondere ein Verfahren zur automatisierten Erkennung von Drehzahlregelabweichungen bei Antriebsumrichtern, welche auch unter die Stromrichter zu subsumieren sind, für Standardanwendungen wie bei Pumpen, Lüfter bzw. Kompressoren.

Die elektrische Maschine wird insbesondere mittels einer Regelung geregelt. Zwischen den Kenngrößen Solldrehzahl und bezogene Motordrehzahl besteht ein deterministischer Zusammenhang. In vielen Fällen stimmen die beiden Größen im Normalfall überein. Allerdings beeinflussen zusätzliche Parameter, wie eine minimale Drehzahl oder die Vermeidung von kritischen Drehzahlen, die Beziehung der Kenngrößen. Dadurch ist keine allgemeingültige Regel gegeben und es ergeben sich maschinenspezifische Unterschiede. Insbesondere bei Erreichen der Drehmomentgrenzen kann es z.B. vorkommen, dass die Solldrehzahl nicht erreicht wird. Derartige Zustände, Ereignisse bzw. Entwicklungen sind zu erkennen bzw. zu überwachen. Die Solldrehzahlen und Istdrehzahlen der elektrischen Maschine können über längere Zeiträume manuell durch Experten überwacht werden. Eine Betrachtung einer Zeitreihe, z.B. in unregelmäßigen Zeitintervallen, dient insbesondere zur Einordnung des aktuellen Gesundheitszustands der elektrischen Maschine. So kann die elektrische Maschine und/oder die Anwendung der elektrischen Maschine überwacht werden.

Eine Aufgabe der Erfindung ist es, eine Überwachung einer elektrischen Maschine zu verbessern.

Eine Lösung der Aufgabe ergibt sich nach einem Verfahren gemäß Anspruch 1. Eine weitere Lösung der Aufgabe ergibt sich beispielsweise gemäß einem der Ansprüche 2 bis 6.

Bei einem Verfahren zur Überwachung einer elektrischen Maschine, erfolgt die Überwachung für wiederkehrende Betriebszustände der dynamoelektrischen Maschine, wobei eine Überwachung von realen Daten einer Regelung der dynamoelektrischen Maschine mit erwarteten Daten erfolgt, wobei Abweichungen der realen Daten und der erwarteten Daten abhängig von der Zeit kumuliert werden, wobei mittels der Abweichungen eine Klassifizierung des Verhaltens der Regelung durchgeführt wird, wobei die Klassifizierung der Regelung über die Zeit überwacht wird, wobei abhängig von der Überwachung der Klassifizierung die erwarteten Daten verändert werden.

Wiederkehrende Betriebszustände sind beispielsweise das Anfahren oder Abbremsen eines Motors. Ein wiederkehrender Betriebszustand kann auch ein Betriebszustand einer Anlage sein oder von diesem abhängen, wobei sich die elektrische Maschine in der Anlage befindet.

Erwartete Daten sind insbesondere Daten, welche von einem Modell generiert werden. Mittels des Modells ist zumindest ein Teil der elektrischen Maschine modellierbar. Die elektrische Maschine kann als zumindest teilweise oder ganz simuliert, also modelliert werden. Insbesondere wird eine Regelung der elektrischen Maschine modelliert, so dass ein Verhalten der elektrischen Maschine ganz oder teilweise simuliert werden kann. Dabei werden insbesondere Istwerte der elektrischen Maschine simuliert. Dies ist z.B. eine Drehzahl, ein Moment, eine Temperatur und/oder davon abhängige Werte (Daten), etc.. Werte ergeben sich insbesondere aus Signalen der elektrischen Maschine. Signale werden insbesondere durch Sensoren erzeugt.

So kann eine elektrische Maschine überwacht werden. Die Überwachung der elektrischen Maschine kann auch eine Bewertung der elektrischen Maschine betreffen bzw. diese einschließen. Durch eine derartige Bewertung kann Expertenwissen ersetzt werden. Es können Betriebszustände berücksichtigt werden. In manchen Betriebszuständen kann eine Abweichung der Werte bzw. Signale (Daten) voneinander, also insbesondere die Abweichung eines Istwertes von einem Sollwert, nicht relevant ist. Dies ist bedingt z.B. durch ein An- und Abfahren des Motors, einen Lastwechsel, eine prozessuale Drehzahlsollwerteänderungen usw.. Auch Parametereinstellung des Umrichters, wie eine minimale Drehzahl oder die Vermeidung kritischer Drehzahlen, sind z.B. Einflussfaktoren, die die bezogene Motordrehzahl beeinflussen. Diese Parameter können entweder manuell ausgelesen und von einem Experten zur Bewertung hinzugezogen werden oder automatisiert in die Überwachung integriert werden. Eine weitere Option ist das Setzen von statischen Grenzwerten, was für den Zustand "in Drehmomentgrenze" eine Alarmmeldung bewirken kann. Dadurch lässt sich der Zustand der Drehmomentgrenze überwachen und zusätzlich kann automatisiert ein Vergleich der Kenngrößen erfolgen. So ist eine manuelle visuelle Betrachtung nicht mehr notwendig. So ist beispielsweise auch ein spezifisches Expertenwissen nicht mehr notwendig, welches eine zeitaufwendige tiefe Datenaggregation voraussetzen könnte. Eine Analyse ist mit hohem personellem Aufwand verbunden. Durch die automatisierte Überwachung auch über sehr lange Zeiträume des Betriebs der elektrischen Maschine müssen diese nicht mehr manuell beobachtet werden. Im Betrieb der elektrischen Maschine werden bei deren Überwachung über längere Zeiträume Daten überwacht, wobei dies insbesondere unter Berücksichtigung von Ausschlusskriterien bzw. Events erfolgt. bewertet werden. Ausschlusskriterien bzw. Events ergeben sich insbesondere aus Betriebszuständen und werden insbesondere automatisch mitberücksichtigt.

In einer Ausgestaltung des Verfahrens sind die Daten eine Drehzahl und/oder ein Moment der elektrischen Maschine bzw. betreffen diese.

In einer Ausgestaltung des Verfahrens betrifft die Kumulierung über die Zeit Minuten, Stunden, Tage und/oder Monate. So ergeben sich längere Zeiträume der Datenüberwachung. Diese Zeiträume unterscheiden sich von kurzen Zeiträumen wie beispielsweise von Zeiten, die bei einer Regelung auftreten. Regler arbeiten bei elektrischen Maschinen häufig in kurzen Zeiträumen wie Sekunden oder Millisekunden.

In einer Ausgestaltung des Verfahrens wird zur Generierung der erwarteten Daten ein Modell verwendet, welches die elektrische Maschine betrifft. Das Modell kann beispielsweise auch die Regelung der elektrischen Maschine und die elektrische Maschine ganz oder teilweise betreffen.

In einer Ausgestaltung des Verfahrens wird abhängig von der Klassifizierung ein neues Modell erzeugt. Bei der Klassifizierung bzw. durch diese, wird also beispielsweise erkannt, ob das Modell noch korrekt ist. Wenn es noch korrekt ist, wird es weiterverwendet. Wenn es nicht mehr korrekt ist, wird eine neues Modell erzeugt. Dies geschieht insbesondere durch ein neues Trainieren des Modells, bzw. das Erzeugen eines neuen Modells und dessen Trainieren.

In einer Ausgestaltung des Verfahrens wird das Modell und/oder das neue Modell trainiert. Damit sind nach dem Trainieren das Modell bzw. das neue Modell trainiert. So kann ein Modell an eine bestimmte Umgebungssituation für die elektrischen Maschine angepasst werden.

Durch zumindest eines der beschriebenen Verfahren ist insbesondere ein Langzeitvergleich einer angeforderten und bezogenen Motordrehzahl möglich. Es erfolgt insbesondere ein automatisierter Vergleich, z.B. der Kenngrößen, und eine Klassifizierung in normales oder anormales Verhalten.

Eine automatische Datenvorverarbeitung und ein datengetriebener Ansatz ermöglicht die Bestimmung des zu erwartenden Normalzustandes und kann verwendet werden, um Anomalien innerhalb kurzer Zeit automatisch zu bestimmen. Auch eine Änderung von Randbedingungen (z.B. Prozessparameter) kann anhand der Daten automatisiert erkannt werden. Ein Fehlerstatus wird beispielsweise entsprechend angepasst.

Gemäß dem Verfahren ist ein kontinuierlicher Vergleich z.B. der Soll-/Istmotordrehzahl ermöglicht, und zwar unter automatisierter Berücksichtigung des Betriebszustandes und/oder den maschinenspezifischen Abhängigkeiten. Die darauf bauende Anomalieerkennung vervollständigt das Gesamtsystem zur Überwachung der Kenngrößen.

In einer Ausgestaltung des Verfahrens wird eine automatische Datenvorbereitung durchgeführt. Die automatisierte Datenvorverarbeitung dient insbesondere zur Erhöhung der Treffsicherheit. Es reduziert die Anzahl an fehlerhaft erkannten Anomalien. Voneinander abweichende Kenngrößen lassen nicht immer auf echte Probleme schließen, sondern tauchen aufgrund von Messungenauigkeiten oder unwesentlichen Betriebszuständen auf:

- Signal glätten: Die Soll/Ist-Signale werden mittels rollenden Medians geglättet:

$$x(t) = median([x_{t-2}, x_{t-1}, x_t, x_{t+1}, x_{t+2}])$$

- Vorzeichen betrachten: Das Vorzeichen der bezogenen Motordrehzahl wird dem der geforderten Drehzahl angepasst:

$$SpdRef = SpdRef * sign(MtrSpd)$$

- Relevanz bestimmen: Als weiterer Schritt wird die Relevanz eines Zeitstempels t bestimmt. Als irrelevant gelten Messwerte, die bestimmte Zeiträume vom nächsten AusZustand entfernt liegen. Zeiträume, in denen die Maschine nicht läuft (inkl. z.B. Anfahr- Abfahrzeiten), werden nicht in die Betrachtung hinzugezogen. Auch gelten Zeitpunkte, in denen die bezogene Drehzahl unterhalb der im Umrichter festgelegten, minimalen Grenze liegt, als irrelevant:

$$t = \begin{cases} relevant, & t \; station\ddot{a}r \; und \; SpdRef(t) > minSpdRef \\ irrelevant, & sonst \end{cases}$$

Diese Schritte werden automatisiert durchgeführt, sodass sich ein Experte direkt auf die wesentlichen Ereignisse konzentrieren kann und nicht durch Falschmeldungen getäuscht wird. Das Einbeziehen der zusätzlichen Messwerte zieht den Kontext, welcher den Betriebszustand und eine geforderte Drehzahl betrifft, in Betracht und ermöglicht einen automatisierten Vergleich der relevanten Zeitpunkte.

In einer Ausgestaltung des Verfahrens wird eine automatische Trainingsphase durchgeführt. In der automatischen Trainingsphase werden die gesammelten Maschinendaten verwendet, um ein Referenzmodell anzulernen, welches die normale Beziehung zwischen angeforderter (*SpdDmd*) und bezogener (*SpdRef*) Motordrehzahl beschreibt.

- Zur Bestimmung der Beziehung zwischen den Kenngrößen werden die Daten G der jeweiligen Maschine verwendet.

Die im Schritt 1 markierten irrelevanten Messpunkte werden hierbei gefiltert und ignoriert:

$$Trainingsdaten = \{G \mid t\ relevant\}$$

• Anhand der Trainingsdaten wird ein lineares Regressionsmodell angelernt, welches die Beziehung beschreibt:

$$SpdRef' = b * SpdDmd + a$$

In einer Ausgestaltung des Verfahrens wird eine automatisierte Erkennung bzw. Klassifizierung durchgeführt. Dies geschieht insbesondere in einer Anwendungsphase der Überwachung.

In der Anwendung wird das im obigen Schritt gelernte Modell auf neue Daten angewandt und eine Gesamtfehlersumme berechnet. Das Referenzmodell liefert für eine angeforderte Drehzahl die normal zu erwartende bezogene Motordrehzahl. Diese wird mit dem tatsächlichen Wert verglichen, was zum Fehler führt:

$$Fehler(t) = |SpdRef(t) - SpdRef'(t)|$$

• Für irrelevante Zeitpunkte aus Schritt 1 wird der Fehler auf 0 gesetzt:

$$Fehler(t) = 0\ , \forall t\ irrelevant$$

• Zur Klassifizierung eines Zeitstempels in normal oder anormal wird der Fehler zu einer Gesamtfehlersumme $\sum$ addiert. Größere Abweichungen fallen stärker ins Gewicht, da die Fehlersumme bei stärkeren Abweichungen schneller anwächst. Durch einen Vergessensfaktor ($\alpha$ <1) nimmt die Gesamtfehlersumme $\sum$ im Laufe der Zeit wieder ab und zurückliegende Fehler werden nicht dauerhaft weitergetragen:

$$\sum(t) = \alpha * \sum(t-1) + Fehler(t)$$

• Überschreitet die Fehlersumme einen einstellbaren Grenzwert, wird der Zeitpunkt als anormal klassifiziert:

$$t = \begin{cases} normal, & \sum(t) \leq Grenzwert \\ anormal, & sonst \end{cases}$$

• Die Fehlersumme wird auf ein Maximum $m$ begrenz, wodurch eine Korrektur zeitnah festgestellt wird. Durch den Vergessensfaktor reduziert sich die Fehlersumme bei Normalbetrieb, und nach ausreichend normalen Messwerten wird der Status automatisch auf normal gesetzt.

$$\sum(t) = min([\sum(t), m\ ])$$

Mittels eines der beschriebenen Verfahren ist z.B. ein automatisierter Vergleich von angeforderter und bezogener Motordrehzahl ohne jeglichen manuellen Aufwand möglich. Dies wird ermöglicht durch ein datenbasiertes Antrainieren des Normalzustandes und dem daraus resultierenden Fehler für neue Datenpunkte. In Verbindung mit der Datenvorbereitung und der Betrachtung der Gesamtfehlersumme können die wirklichen Anomalien erkannt werden, während irrelevante Ausreißer ignoriert werden. Ein weiterer Vorteil ist es, dass die Übergänge zwischen Trainings- und Anwendungsphase absolut automatisiert erfolgen können. Es wird so lange trainiert, bis die Modelparameter konvergieren, wodurch keine manuelle Vorauswahl an Gut/Schlechtdaten nötig ist. Während der Anwendung wird insbesondere dauerhaft überprüft, ob das Referenzmodell noch aktuell ist und automatisiert ein neuer Trainingsvorgang angestoßen. Die erwartete Beziehung der Signale wird anhand von Maschinendaten trainiert, wodurch die detaillierte Betrachtung der Umrichterparameter wegfällt. Ein aufwendig erstelltes Expertenmodell wird durch ein einfaches Datenmodell ersetzt. Das heißt, einfache Skalierbarkeit und Anwendbarkeit auf beliebige Assets, also auf unterschiedlichen elektrischen Maschinen.

Die Merkmale der einzelnen beanspruchten bzw. beschriebenen Gegenstände und Verfahren sind ohne Weiteres miteinander kombinierbar. Im Folgenden wird die Erfindung beispielhaft anhand von Figuren näher dargestellt und erläutert. Die in den Figuren gezeigten Merkmale können fachmännisch zu neuen Ausführungsformen kombiniert werden, ohne die Erfindung zu verlassen. Es zeigen:

FIG 1    den Einsatz von Modellen und
FIG 2    Trainingsphasen und Anwendungsphasen.

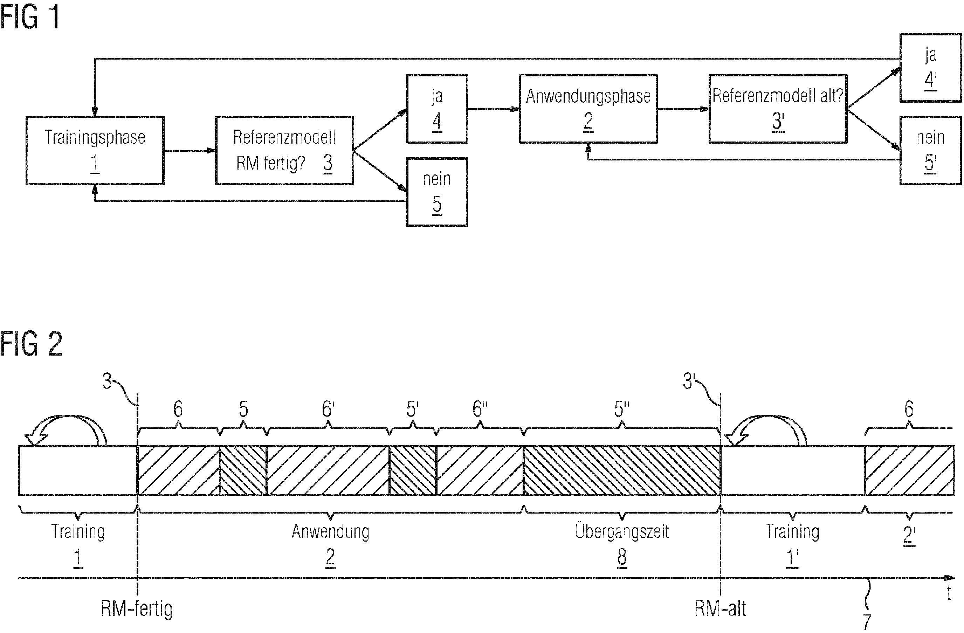

Die Darstellung nach Figur 1 zeigt den Einsatz von Modellen, insbesondere das Zusammenspiel automatisierter Trainings- und Anwendungsphasen.

Die Darstellung nach Figur 2 zeigt Trainingsphasen und Anwendungsphasen zusammen mit einer Übergangszeit über einen Zeitstrahl 7. Über diesen Zeitstrahl ist das Training 1, 1' und die Anwendung des Referenzmodells (RM) im Zeitstrahl 7 gezeigt. Nach einer Phase des Trainings 1' des Referenzmodells (Modells) ist dieses fertig und kommt zur Anwendung in der Anwendungsphase 2. Die Anwendungsphase 2 weist normale Phasen 6, 6', 6" auf, welche unauffällig sind und Phasen auf, welche nicht normal sind, also eine Anomalie darstellen. Dies Phasen mit der Anomalie sind die Anomaliephasen 5, 5', 5". Durch zumindest eine der Anomaliephasen kann erkannt werden, dass das Modell (RM) veraltet ist. Damit ergibt sich einer Übergangszeit 8, in welcher das Modell veraltet ist. Danach erfolgt ein neues Training 1', mit einer anschließenden Anwendung 2'des Modells mit einer neuen ersten normalen Phase 6 in der Anwendung 2'.

Die Darstellung nach Figur 1 zeigt hierzu die Abfolge in einem Blockdiagramm. Es wird insbesondere eine Menge an Maschinendaten verwendet, um ein Referenzmodell (Modell), welches einen Normalzustand beschreibt, in einer Trainingsphase 1 anzutrainieren. Hierzu werden die vorverarbeiteten, relevanten Daten verwendet. Das Training erfolgt so lange bis es fertig ist. Hierzu wird das Modell iterativ, bzw. in einer Schleife, abgefragt 3 und eine Antwort 4,5 ermittelt. Wenn das Modell fertig ist, folgt eine Anwendungsphase 2. Dabei wird iterativ, bzw. in einer Schleife, abgefragt, ob das Modell alt, also veraltet ist. Hieraus ergeben sich die Antworten 4' für ja und 5'für nein, welche in die entsprechende nachfolgende Schleife führen. Die Antwort, ob ein veraltetes Modell vorliegt, ergibt sich aus einer Auswertung der erkannten Anomalien. Im laufenden Betrieb wird also das trainierte Modell in der Anwendungsphase 2 verwendet, um die Zeitpunkte in normal oder anormal zu klassifizieren. Dazu wird z.B. ein aus dem Referenzmodell resultierende Fehler zu einer Gesamtfehlersumme hinzuaddiert und anhand eines festen Grenzwertes bewertet. Der aktuelle Zeitstempel wird als normal oder anormal klassifiziert. Das Zusammenspiel der beiden Phasen verdeutlichen die Darstellungen nach Figur 1 und Figur 2. Liegen Daten, insbesondere aus der Vergangenheit, vor kann eine Trainingsphase beginnen. Sobald das Referenzmodell konvergiert, d.h. sobald sich die Modelparameter nicht mehr signifikant verändern, gilt es als fertig trainiert und kann für neue Datenpunkte in der Anwendungsphase verwendet werden. Innerhalb der Anwendungsphase werden die Zeitpunkte in normal bzw. anormal klassifiziert. Somit werden ungewöhnliche Zustände erkannt und einem Anwender gemeldet. Hält der ungewöhnliche Zustand an, kann von einer grundlegenden System- oder Betriebsänderung ausgegangen werden. Der ursprünglich trainierte "Normalzustand" deckt die Realität nicht mehr ab und muss neu angelernt werden. Eine Übergangzeit (z.B. eine Woche oder ein Monat) stellt sicher, dass die Veränderung als Anomalie sichtbar gemacht wird. Auf Basis des beschriebenen Verfahrens kann darauf reagiert werden. Als Reaktion kann das Referenzmodell selbständig, also automatisiert, erneuert werden, woraufhin ein neuer Normalzustand definiert wird.

**Patentansprüche**

1.  Verfahren zur Überwachung einer elektrischen Maschine, wobei die Überwachung für wiederkehrende Betriebszustände der dynamoelektrischen Maschine erfolgt, wobei eine Überwachung von realen Daten einer Regelung der dynamoelektrischen Maschine mit erwarteten Daten erfolgt, wobei Abweichungen der realen Daten und der erwarteten Daten abhängig von der Zeit kumuliert werden, wobei mittels der Abweichungen eine Klassifizierung des Verhaltens der Regelung durchgeführt wird, wobei die Klassifizierung der Regelung über die Zeit überwacht wird, wobei abhängig von der Überwachung der Klassifizierung die erwarteten Daten verändert werden.

2.  Verfahren nach Anspruch 1, wobei die Daten eine Drehzahl und/oder ein Moment der elektrischen Maschine betreffen.

3.  Verfahren nach Anspruch 1 oder 2, wobei die Kumulierung über die Zeit Minuten, Stunden, Tage und/oder Monate betrifft.

4.  Verfahren nach einem der Ansprüche 1 bis 3, wobei zur Generierung der erwarteten Daten ein Modell verwendet wird, welches die elektrische Maschine betrifft.

**5.** Verfahren nach Anspruch 4, wobei abhängig von der Klassifizierung ein neues Modell erzeugt wird.

**6.** Verfahren nach Anspruch 4 oder 5, wobei das Modell und/oder das neue Modell trainiert sind und/oder trainiert werden.

## FIG 1

```
                                                              ┌──────────┐
                                                              │   ja     │
                                                              │   4'     │
                                                              └──────────┘
                                                                   ↑
┌──────────────┐    ┌──────────────┐   ┌────────┐   ┌──────────────┐   ┌──────────────┐
│ Trainingsphase│    │ Referenzmodell│  │   ja   │   │Anwendungsphase│  │Referenzmodell alt?│
│      1       │    │ RM fertig?  3 │   │   4    │   │      2       │   │      3'      │
└──────────────┘    └──────────────┘   └────────┘   └──────────────┘   └──────────────┘
                                                                              │
                                       ┌────────┐                         ┌──────────┐
                                       │  nein  │                         │  nein    │
                                       │   5    │                         │   5'     │
                                       └────────┘                         └──────────┘
```

## FIG 2

Training 1 — RM-fertig — Anwendung 2 — Übergangszeit 8 — RM-alt — Training 1' — 2'

Europäisches Patentamt
European Patent Office
Office européen des brevets

# EUROPÄISCHER RECHERCHENBERICHT

**Nummer der Anmeldung**

**EP 22 19 8924**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2022/042866 A1 (SIEMENS AG [DE]) 3. März 2022 (2022-03-03) * Seite 3, Zeile 20 – Seite 4, Zeile 4 * * Seite 18, Zeile 32 – Seite 19, Zeile 11 * * Seite 15, Zeile 37 – Seite 17, Zeile 3 * ----- | 1-6 | INV. H02P6/34 G05B17/02 G06N20/00 H02P23/00 |
| A | DE 10 2019 135608 A1 (BAYERISCHE MOTOREN WERKE AG [DE]) 24. Juni 2021 (2021-06-24) * Absatz [0039] – Absatz [0054]; Abbildungen 1-3 * ----- | 1-6 | |

**RECHERCHIERTE SACHGEBIETE (IPC)**

H02P
G05B
G06N

Der vorliegende Recherchenbericht wurde für alle Patentansprüche erstellt

| Recherchenort | Abschlußdatum der Recherche | Prüfer |
|---|---|---|
| München | 13. März 2023 | Schürle, Patrick |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 19 8924

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-03-2023

| Im Recherchenbericht angeführtes Patentdokument | Datum der Veröffentlichung | Mitglied(er) der Patentfamilie | Datum der Veröffentlichung |
|---|---|---|---|
| WO 2022042866 A1 | 03-03-2022 | KEINE | |
| DE 102019135608 A1 | 24-06-2021 | CN 114585983 A | 03-06-2022 |
| | | DE 102019135608 A1 | 24-06-2021 |
| | | US 2023013544 A1 | 19-01-2023 |
| | | WO 2021121695 A1 | 24-06-2021 |

EPO FORM P0461

Für nähere Einzelheiten zu diesem Anhang : siehe Amtsblatt des Europäischen Patentamts, Nr.12/82